# EUROPEAN PATENT APPLICATION

(11) **EP 0 887 317 A2**
(43) Date of publication of application: **30.12.1998**
(21) Application number: 98304954.5
(22) Date of filing: 24.06.1998
(51) Int. Cl.: C03B 25/087, C03B 29/10

(54) **Improvements relating to glass sheet firing**

(30) Priority: 25.06.1997 GB 9713284
(71) Applicant: Barron, Michael Sean, Cheltenham, Gloucestershire GL50 2HT (GB)
(72) Inventor: Barron, Michael Sean, Cheltenham, Gloucestershire GL50 2HT (GB)
(74) Representative: James, Michael John Gwynne

(57) **Abstract**

Screen-printed flat glass sheets 1 to be fired are held within grooves 2 of a base channel member 3. At intervals the upper edges of the pairs of glass sheets 1 are held by jigs 5 and a plate 6 against a support strut 7. The channel member 3 is mounted on a platform 11 which can be rolled into a kiln 13. Heating elements 14 heat the glass sheets 1 in a controlled manner to a firing temperature of 530°C to 540°C over 6 hours, followed by a 1 hour slow cooling time down to 470°C as the glass anneals. The glass sheets are then allowed to cool steadily over a period of 24 hours to room temperature.

## Description

This invention is concerned principally with the production of glass sheet which decorated with high temperature ceramic enamels. The enamels are screen printed or otherwise applied to the surface of the glass and, when the glass has been fired in a kiln to a temperature of approximately 540°C the ceramic enamels become fused into the glass surface. However the glass substrate softens to some extent and a method of retaining flatness of the glass sheet must be employed. The standard method of firing decorated glass sheet has the sheet placed on a flat or angulated bed within the kiln so that the sheet is supported on one side over its entirety. However there are a number of drawbacks to this process, not the least of which is limited production capability and the tendency for the glass sheet to "curl" at the edges, particularly if the cooling process is carried out too rapidly.

According to the present invention there is provided a kiln incorporating heating elements for firing flat glass sheets in a vertical array and including a support arrangement comprising a vertically aligned support frame, and, to one or both sides of the support frame, a grooved base channel member for receipt of the bottom edge of a glass sheet and a jig or jigs for holding a part or parts of the top edge of the sheet relative to the support frame whilst allowing for lengthwise expansion of the glass sheet as it is heated.

With such an arrangement the glass sheet is supported vertically in the kiln during firing and it has been found that the fusing of the ceramic enamels into the glass is achieved in a very satisfactory manner and without a tendency for the glass sheet to become deformed. Furthermore it has been found that several sheets can be fired within the kiln at one and the same time. To this end the base channel and the jig or jigs may be designed to support a pair of glass sheets placed back to back. Furthermore a series of grooves and jigs may be provided to support several glass sheets separately positioned side by side in respective grooves along the base channel.

Preferably a cushioning layer of woven vermiculite or silica is laid over the base channel member. The base channel itself is ideally formed from glass into which the grooves have been formed.

The jigs are ideally formed from brass and the support framework can be formed by steel struts.

The invention further extends to a method of heating flat glass sheets in a kiln, wherein one or more glass sheets are set into a grooved base channel member so as to be aligned vertically adjacent to a support frame and are supported by jigs at their top edges, the frame and glass sheets are loaded into a kiln and heated to a predetermined firing temperature, and the glass sheets are then subjected to controlled cooling to room temperature.

In the preferred method the glass sheets have decorative ceramic enamels applied to them prior to the firing.

The glass sheets may be heated to approximately 530°C - 540°C, over about 6 hours, are cooled slowly over about 1 hour for annealing purposes to a temperature of about 470°C and are then allowed to cool steadily to room temperature over about 24 hours.

Ideally several glass sheets are supported side by side in respective grooves in the base channel member to one or both sides of the support frame. Pairs of glass sheets may be supported back to back in a single groove for each pair in the base channel member.

The invention may be performed in various ways and a preferred embodiment will now be described, by way of example, with reference to the accompanying drawings, in which:-
Figure 1 is a perspective view of parts of a support framework in which a number of glass sheets are mounted for firing in a kiln; and
Figure 2 is an end view of part of the framework and glass sheets of Figure 1 loaded into a kiln.

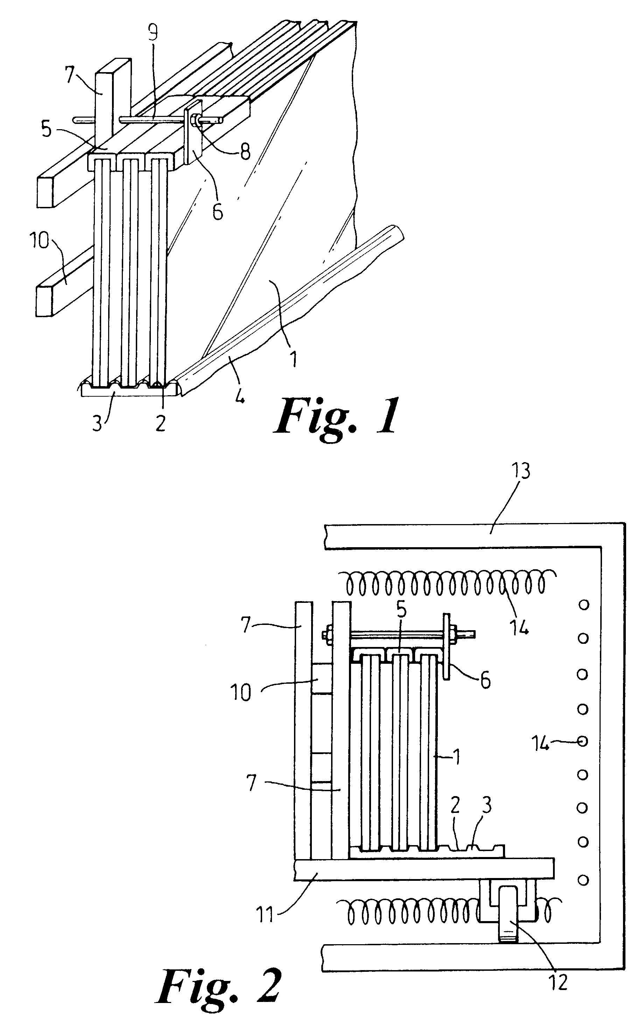

Ceramic type enamels are frit screen printed in a conventional manner onto flat glass sheets. The glass sheets are then mounted in pairs (with the uncoated sides back to back) into a support framework. As can be seen from Figure 1 the pairs of sheets 1 are held within grooves 2 of a base channel member 3 formed from glass (the grooves being formed by sand blasting). A sheet of woven vermiculite 4 acts as padding between the glass sheets 1 and the channel member 3. At intervals the upper edges of the pairs of glass sheets 1 are held by jigs 5 and a plate 6 on the outer side pulls the jigs 5 against a support strut 7 (by tightening a nut 8 on a rod 9 joining the plate 6 and the struts 7). The individual vertical struts 7 are interconnected by cross members 10 of a support framework.

As shown in Figure 2 the channel member 3 is mounted on a platform 11 which can be rolled on wheels 12 into a kiln 13. Heating elements 14 (in a predetermined array) are then operated to heat the glass sheets 1 in a controlled manner to a firing temperature of 530°C to 540°C which causes the ceramic enamels to be fused into the surface of the glass. Typically there will be a heat up time of 6 hours which is then followed by a 1 hour slow cooling time to bring the temperature down to 470°C as the glass anneals. The glass sheets are then allowed to cool steadily over a period of 24 hours to room temperature.

It has been found that this procedure results in a consistent finish of the printed enamels over the surface of the glass. It is believed that this is due to the fact that the creation of convection currents in the gaps between the pairs of glass sheets 1 and around the sides of the whole assembly results in a relatively consistent temperature throughout all of the glass sheets.

The size of the glass sheets employed is essentially immaterial and it is feasible to employ up to 12 sheets of glass deep on each side of the steel framework 7,10 in one firing operation.

## Claims

1. A kiln incorporating heating elements for firing flat glass sheets in a vertical array and including a support arrangement comprising a vertically aligned support frame, and, to one or both sides of the support frame, a grooved base channel member for receipt of the bottom edge of a glass sheet and a jig or jigs for holding a part or parts of the top edge of the sheet relative to the support frame whilst allowing for lengthwise expansion of the glass sheet as it is heated.

2. A kiln according to Claim 1, wherein the base channel and the jig or jigs are designed to support a pair of glass sheets placed back to back and/or wherein a series of grooves and jigs are provided to support several glass sheets separately positioned side by side in respective grooves along the base channel.

3. A kiln according to Claim 1 or Claim 2, wherein the jigs are formed from brass and preferably the support framework is formed from steel struts.

4. A kiln according to any one of Claims 1 to 3, wherein a cushioning layer of woven vermiculite or silica is laid over the base channel member.

5. A kiln according to any one of Claims 1 to 4, wherein the base channel member is formed from glass.

6. A method of heating flat glass sheets in a kiln, wherein one or more glass sheets are set into a grooved base channel member so as to be aligned vertically adjacent to a support frame and are supported by jigs at their top edges, the frame and glass sheets are loaded into a kiln and heated to a predetermined firing temperature, and the glass sheets are then subjected to controlled cooling to room temperature.

7. A method according to Claim 6, wherein the glass sheets have decorative ceramic enamels applied to them prior to the firing.

8. A method according to Claim 6 or Claim 7, wherein the glass sheets are heated to approximately 530°C - 540°C, over a period of time of about 6 hours, are cooled slowly over about 1 hour for annealing purposes to a temperature of about 470°C and are then allowed to cool steadily to room temperature over about 24 hours.

9. A method according to any one of Claims 6 to 8, wherein several glass sheets are supported side by side in respective grooves in the base channel member to one or both sides of the support frame.

10. A method according to any one of Claims 6 to 9, wherein pairs of glass sheets are supported back to back in a single groove for each pair in the base channel member.

11. Any novel combination of features of the device or method as here described with reference to the accompanying drawings.
